# EUROPEAN PATENT APPLICATION

(11) **EP 4 600 212 A1**
(43) Date of publication of application: **13.08.2025**
(21) Application number: 24157034.0
(22) Date of filing: 12.02.2024
(51) Int. Cl.: C01C 1/04

(54) **IMPROVED SYSTEM AND PROCESS FOR AMMONIA SYNTHESIS AND HEAT RECOVERY**

(71) Applicant: Yara International ASA, 0277 Oslo (NO)
(72) Inventor: GILLES, David, 1060 Auderghem (BE); VERSTEELE, Wim, 9961 Boekhoute (BE)
(74) Representative: De Clercq & Partners

(57) **Abstract**

The present disclosure provides an ammonia production plant comprising an ammonia converter system comprising one or more catalytic beds, wherein an ammonia synthesis gas comprises hydrogen and nitrogen is converted into a product stream; a first high-pressure steam generator downstream of the ammonia converter system, a first heat exchanger, downstream of the high-pressure steam generator, configured for exchanging heat between the product stream and the ammonia synthesis gas, wherein the ammonia production plant further comprises a medium-pressure steam generator, configured to generate medium pressure steam using heat recovered from the product stream and/or from the ammonia synthesis gas, particularly wherein the medium-pressure steam generator is located downstream of the high-pressure steam generator.

The present disclosure further provides a method to revamp an existing ammonia production plant into an ammonia production plant according to the present disclosure, and to a method for operating an ammonia production plant.

## Description

### Field

The present disclosure is situated in the field of industrial scale ammonia production.

### Background

A conventional ammonia-producing plant first converts gaseous hydrocarbons, particularly natural gas (i.e., methane) or LPG (liquefied petroleum gases such as propane and butane), into gaseous hydrogen. The method for producing hydrogen from hydrocarbons, particularly natural gas, is known as steam reforming. The hydrogen is mixed with nitrogen together in the appropriate ratio for the production of ammonia forming a mixture known as ammonia synthesis gas, also referred to as syngas. The hydrogen and nitrogen in the ammonia synthesis gas is combined to produce ammonia via the Haber-Bosch process also known as an ammonia synthesis loop. More in particular, in the so-called hot loop of the ammonia synthesis loop, the hydrogen and nitrogen gases are passed over one or more catalyst beds in one or more synthesis reactors or synthesis converters at a high temperature and pressure, typically with cooling between the different catalyst beds or reactors/converters. Next, the ammonia is separated from the unreacted hydrogen and nitrogen and recovered in liquid form in what is referred to as the cold loop of the ammonia production process. The unreacted gases are recycled to the one or more catalyst beds, by combining and compressing the unreacted gases with nitrogen and hydrogen to obtain the ammonia synthesis gas. The ammonia synthesis gas production system typically comprises a desulfurization unit, a reforming section comprising one or more reforming units, such as primary and secondary reformers, shift reactor(s), a CO₂ removal unit and a methanation unit and optionally a liquid nitrogen wash unit, which together form the "front end" of an ammonia production plant, whereas the ammonia synthesis loop forms the "back end" of an ammonia production plant.

An ammonia-producing plant, particularly the ammonia synthesis loop, may be modified for a variety of reasons. The plant may need to be modernized for improving its performance, such as production capacity and/or reaction efficiency and/or energy efficiency. The catalyst activity of the catalysts may have deteriorated, and they need to be replaced. These modifications typically affect the heat generation and temperature profile during the synthesis as well. For instance, a first reactor or first catalyst bed may be more efficient and thus produce more heat than prior to the modification. However, while these modifications of an existing ammonia-producing plant allow for an increase of the production capacity and/or conversion yield, a suitable modified heat recovery to achieve energy savings is often lacking. For example, modifying or replacing the existing heat exchangers often means a complete redesign of the plant section, similar to designing the section of an entirely new plant. Alternatively, a common approach for recovering reaction heat is by increasing the production of high-pressure steam (80-120 bara; 250°C-350°C), in a high-pressure (HP) steam generator or boiler downstream of the reactor(s). However, there may be no need or ability in the plant to consume or export additional HP steam.

There is thus a need in the art for improved ammonia synthesis methods and systems with increased and/or more efficient recovery of the reaction heat generated in the synthesis reactor.

### Summary of the invention

The inventors have developed an improved system for producing ammonia and related methods that address one or more of the above-mentioned drawbacks.

A first aspect of the present application provides an ammonia production plant comprising an ammonia converter system comprising (i) one or more catalytic beds, an inlet for an ammonia synthesis gas, and an outlet for a product stream, wherein the ammonia synthesis gas comprises hydrogen and nitrogen, and wherein the product stream comprises ammonia and unreacted ammonia synthesis gas; (ii) a first high-pressure steam generator, downstream of the ammonia converter system, configured to generate steam at a pressure ranging from 60 to 120 bara, such as from 80 to 120 bara, using heat recovered from the product stream; and (iii) a first heat exchanger, downstream of the high-pressure steam generator, configured for exchanging heat between the product stream and the ammonia synthesis gas, for heating the ammonia synthesis gas, wherein the ammonia synthesis gas outlet of the first heat exchanger is fluidly connected with the ammonia synthesis gas inlet of the ammonia converter system by connecting means; wherein the ammonia production plant further comprises (iv) a medium-pressure steam generator, configured to generate steam at a pressure ranging from 20 to 50 bara using heat recovered from the product stream and/or from the ammonia synthesis gas.

In particular embodiments, the medium-pressure steam generator is located downstream of the high-pressure steam generator, particularly between the high-pressure steam generator and the first heat exchanger, and the medium-pressure steam generator is configured to generate steam at a pressure ranging from 20 to 50 bara using heat recovered from the product stream.

Although the skilled person would expect that the production of high-pressure steam is preferred over the co-production of medium-pressure steam, and would thus opt to maximize the production of high pressure steam to optimize the heat recovery in an ammonia synthesis loop, it was surprisingly found that the presence or installation of a medium-pressure steam generator, particularly between the first high-pressure steam generator and the first heat exchanger has multiple advantages. More heat is recovered from the product stream, so that the ammonia synthesis gas leaving the first heat exchanger and/or entering the ammonia converter system has a lower temperature, such as by 40-60°C, compared to a system without a medium-pressure steam generator. The colder feed of ammonia synthesis gas allows the use of different, less resistant and less expensive materials and/or a simpler design for devices and elements that are in contact with the ammonia synthesis gas. The colder feed of ammonia synthesis gas is ideally suited to be combined with more active and more efficient catalysts, while maintaining essentially the same process conditions, such as outlet temperatures of the product stream, and maintaining essentially the same heat recovery.

Advantageously, the generated medium pressure steam has multiple uses. It can be further superheated in the same or another plant location and can be provided to the medium-pressure steam network, or it can even be exported outside the ammonia production plant.

In particular embodiments, the ammonia production plant according to the present disclosure further comprises a medium-pressure steam network and/or a steam consuming unit, wherein the steam outlet of the medium-pressure steam generator is in fluid communication with or connected to the medium-pressure steam network and/or to the steam-consuming unit. The steam-consuming unit may be a steam reforming unit, a process condensate stripping unit or a CO₂ removal unit in a hydrogen production section of the ammonia production plant. This way, no steam superheating of the medium-pressure steam is required.
In particular embodiments, the ammonia production plant according to the present disclosure further comprises a supply of boiler feed water, wherein the medium-pressure steam generator and the first high-pressure steam generator are connected to the same supply of boiler feed water. This way, no separate preheating of the boiler feed water for the medium-pressure steam generator is necessary.

In particular embodiments, in the ammonia production plant according to the present disclosure, the first high-pressure steam generator is connected to a waste boiler feed water line, for removing waste boiler feed water from the first-high pressure steam generator, wherein the waste boiler feed water line is in fluid communication with or connected to the medium-pressure steam generator. By supplying the waste boiler feed water of the high-pressure steam generator additional medium-pressure steam can be generated.

Furthermore, the presence or installation of a medium-pressure steam generator allows an efficient control of the process temperature: by varying the steam pressure of the medium-pressure steam, and hence its boiling point, the process temperature, particularly the temperature of the product stream at the process side outlet of the medium-pressure steam generator can be effectively controlled, without the need of a bypass. Controlling the steam pressure in the steam generator and/or varying the amount of high-pressure steam vs medium-pressure steam thus enables effective process temperature control in the ammonia synthesis loop. Accordingly, in particular embodiments, the ammonia production plant according to the present disclosure further comprises a controlling means, for controlling the pressure of the steam generated by the medium-pressure steam generator, and/or for controlling the weight ratio of high-pressure steam vs medium-pressure steam generated by the high-pressure steam generator and the medium-pressure steam generator, respectively.

In addition, in view of the lower temperature of the ammonia synthesis gas, the material of the equipment in contact with the ammonia synthesis gas can be chosen based on milder process conditions. Accordingly, in particular embodiments, the material in contact with ammonia synthesis gas of the first heat exchanger and/or the connecting means between the ammonia synthesis gas outlet of the heat exchanger and the ammonia synthesis gas inlet of the ammonia converter system is 1 ¼ Cr ½ Mo steel or an equivalent thereof.

In particular embodiments, the ammonia converter system of the ammonia production plant according to the present disclosure comprises (a) one or more ammonia converter units, wherein each ammonia converter unit comprises one or more catalyst beds, and (b) one or more heat recovery or heat removal systems, located between two adjacent converter units or catalyst beds, configured for recovering or removing heat from the product stream exiting an upstream converter unit or catalyst bed, particularly wherein the one or more heat recovery or heat removal systems comprise a second heat exchanger, or several second heat exchangers, located between two adjacent converter units or catalyst beds, configured for exchanging heat between the ammonia synthesis gas and the product stream exiting a converter unit or a catalyst bed, and, wherein the one or more heat recovery or heat removal systems optionally further comprise a second high-pressure steam generator, configured for generating high-pressure steam using heat recovered from the product stream; a boiler feed water preheater, or a high-pressure or medium pressure steam superheater.

In particular embodiments, the ammonia converter system of the ammonia production plant according to the present disclosure comprises (a) one or more ammonia converter units, wherein each ammonia converter unit comprises one or more catalyst beds, (b) a second heat exchanger, or several second heat exchangers, located between two adjacent converter units or catalyst beds, configured for exchanging heat between the ammonia synthesis gas and the product stream exiting a converter unit or a catalyst bed, and (c) a medium pressure steam superheater, particularly located between two adjacent converter units or catalyst beds, and configured for superheating the medium-pressure steam generated by the medium-pressure steam generator using heat recovered from the product stream exiting a converter unit or one or more catalyst beds upstream of the medium-pressure steam generator.

In particular embodiments, the ammonia production plant according to the present disclosure further comprises an ammonia separator unit for separating ammonia from the unreacted ammonia synthesis gas, comprising a product stream inlet in fluid connection with the product stream outlet of the first heat exchanger; an outlet for ammonia, and an outlet for the unreacted ammonia synthesis gas. More in particular, in the ammonia production plant according to the present disclosure, the unreacted ammonia synthesis gas is combined with hydrogen and nitrogen and pressurized, particularly in a syngas compressor, thereby obtaining the ammonia synthesis gas.

In particular embodiments, the ammonia production plant according to the present disclosure further comprises a hydrogen production system. The hydrogen production system may comprise a water electrolysis unit, and/or may comprise a steam reforming section, comprising one or more steam reforming units, such as a primary and secondary reformers, autothermal reformer, or partial oxidation reactor; a shift reactor; a CO₂ removal unit; and a methanation unit and/or a liquid nitrogen wash unit.

A second, related aspect of the present disclosure provides a method for revamping an ammonia production plant into an ammonia production plant according to the present disclosure, wherein the ammonia production plant comprises:
- an ammonia converter system comprising one or more catalytic beds, an inlet for an ammonia synthesis gas, and an outlet for a product stream, wherein the ammonia synthesis gas comprises hydrogen and nitrogen and wherein the product stream comprises ammonia and unreacted ammonia synthesis gas;
- a first high-pressure steam generator, downstream of the ammonia converter system, configured to generate steam at a pressure of at least 60 bara, particularly ranging from 80 to 120 bara using heat recovered from the product stream; and
- a first heat exchanger, downstream of the ammonia converter, configured for exchanging heat between the product stream and the ammonia synthesis gas, for heating the ammonia synthesis gas, wherein the ammonia synthesis gas outlet of the heat exchanger is fluidly connected with the ammonia synthesis gas inlet of the ammonia converter system by connecting means;
wherein the method further comprises the step of installing a medium-pressure steam generator, configured to generate steam at a pressure ranging from 20 to 50 bara using heat recovered from the product stream and/or from the ammonia synthesis gas.

More in particular, the medium-pressure steam generator is installed downstream of the first high-pressure steam generator, particularly between the first high-pressure steam generator and the first heat exchanger. The medium-pressure steam generator is thus configured to generate steam at a pressure ranging from 20 to 50 bara, such as between 35 and 50 bara, using heat recovered from the product stream.

In particular embodiments, the medium-pressure steam generator is installed in fluid communication with or connected to the boiler feed water supply of the first high-pressure steam generator.

In particular embodiments, the first high-pressure steam generator is connected to a waste boiler feed water line, for removing waste boiler feed water from the first-high pressure steam generator, and wherein the waste boiler feed water line of the first-high pressure steam generator is in fluid communication with or connected to the medium-pressure steam generator, or stated differently, wherein the method further comprise installing the medium-pressure steam generator in fluid communication with or connected to the waste boiler feed water line of the first high-pressure steam generator

In particular embodiments, the medium-pressure steam generator is installed in fluid communication with or connected to the medium-pressure steam network of the ammonia production plant and/or in fluid communication with or connected to a steam-consuming unit.
In particular embodiments, the revamping method according to the present disclosure further comprises the step of replacing the first heat exchanger and/or the connecting means between the ammonia synthesis gas outlet of the first heat exchanger and the ammonia synthesis gas inlet of the ammonia converter system by a heat exchanger and/or connecting means wherein the material in contact with the ammonia synthesis gas is 1 Cr ½ Mo steel or equivalent.

A further, related aspect of the present disclosure relates to a method for operating an ammonia production plant, comprising the steps of
(a) providing an ammonia synthesis gas to an ammonia converter system comprising one or more catalytic beds, and generating a product stream, wherein the ammonia synthesis gas comprises hydrogen and nitrogen, and wherein the product stream comprises ammonia and unreacted ammonia synthesis gas;
(b) providing the product stream from the ammonia converter system to a high-pressure steam generator, and generating high-pressure steam at a pressure of at least 60 bara, particularly ranging from 60 bara to 120 bara or from 80 to 120 bara;
(c) heating the ammonia synthesis gas in a heat exchanger, downstream of the high-pressure steam generator, using heat recovered from the product stream;
   wherein the method further comprises the step of
(d) generating medium pressure steam at a pressure ranging from 20 to 50 bara in a medium-pressure steam generator, using heat recovered from the product stream and/or from the ammonia synthesis gas. More in particular, medium pressure steam is generated in a medium-pressure steam generator, using heat recovered from the product stream, downstream of the first high-pressure steam generator and upstream of the first heat exchanger.

In particular embodiments, the ammonia synthesis gas is provided to the ammonia converter system, particularly to a first reactor or a first catalytic bed of the ammonia converter system, at a temperature ranging between 330 °C and 370 °C, particularly at a temperature between 340°C and 360 °C.

In particular embodiments of the method for operating an ammonia production plant, the method further comprises the step of controlling the temperature in the ammonia synthesis loop, particularly the temperature of the product stream and the ammonia synthesis gas and/or the temperature in the ammonia converter system, by increasing or decreasing the pressure of the medium pressure steam generated in step (d) and/or by increasing or decreasing the ratio of the amount of generated medium-pressure steam to the generated high-pressure steam.

In particular embodiments of the method for operating an ammonia production plant, the medium-pressure steam generated in the medium-pressure steam generated is used as process steam in a steam-consuming unit in the ammonia production plant, wherein the steam-consuming unit may be a steam reforming unit, a CO₂ removal unit or process condensate stripper in a hydrogen production section of the ammonia production plant; and/or the medium-pressure steam is provided to a medium-pressure steam network; and/or used directly as a hot-utility within the plant; and/or wherein the medium pressure steam is exported outside the ammonia production plant.

### Description of the Figures

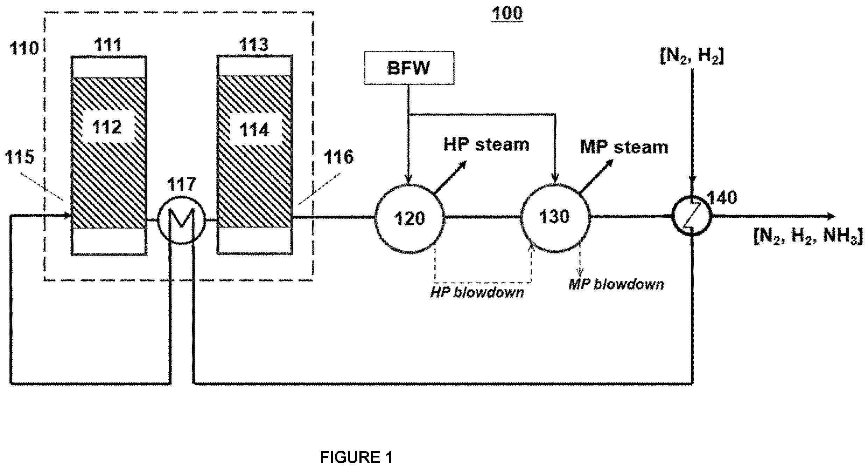

FIG. 1 schematically represents an ammonia synthesis loop section of an ammonia production plant according to an embodiment of the present disclosure.

### Detailed description

Before the present system and method of the invention are described, it is noted that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

It is to be understood that other embodiments may be utilised and structural or logical changes may be made without departing from the scope of the present invention. The following detailed description, therefore, is not to be taken in a limiting sense, and the scope of the present invention is defined by the appended claims.

The term "high-pressure steam" or "HP" as used herein refers to steam having a pressure above 60 bara, such as ranging between 60 to 120 bara, particularly ranging between 80 to 120 bara. The term "medium-pressure steam" or "MP" as used herein refers to steam having a pressure ranging between 20 and 50 bara, particularly between 35 and 50 bara. As used herein, the term "ammonia synthesis gas" refers to a gas stream comprising hydrogen and nitrogen, particularly comprising at least 95 vol%, at least 98 vol%, or at least 99 vol% of hydrogen and nitrogen, typically in a 3:1 molar ratio of hydrogen to nitrogen. The term "product stream" as used herein refers to a composition, particularly a gaseous composition, produced in the ammonia converter system, and comprising ammonia and unreacted ammonia synthesis gas, or stated differently, comprising ammonia and unreacted hydrogen and unreacted nitrogen.

The present disclosure generally relates to an ammonia production plant and related methods, wherein the ammonia production plant, particularly the ammonia synthesis loop of the ammonia production plant, comprises (i) an ammonia converter system comprising one or more catalytic beds, wherein an ammonia synthesis gas comprises hydrogen and nitrogen is converted into a product stream; (ii) a first high-pressure steam generator downstream of the ammonia converter system, (iii) a first heat exchanger downstream of the high-pressure steam generator, configured for exchanging heat between the product stream and the ammonia synthesis gas, wherein the ammonia production plant further comprises (iv) a medium-pressure steam generator, configured to generate medium pressure steam using heat recovered from the product stream and/or from the ammonia synthesis gas, particularly wherein the medium-pressure steam generator is located downstream of the high-pressure steam generator.

Surprisingly, the combination of a high-pressure steam generator and a medium-pressure steam generator, particularly to recover heat from the product stream, has several advantages compared to a system only comprising a high-pressure steam generator or compared to a system with increased high-pressure steam generation. First, the recovery of additional heat results in a cooler product stream, which is advantageous for the downstream ammonia separation unit. It also results in a cooler ammonia synthesis gas, which allows the use of improved catalyst and/or reactor design with improved ammonia production efficiency and/or energy efficiency and the use of cheaper and simpler designed elements that are in contact with the ammonia synthesis gas and/or the product stream. In addition, the generated medium-pressure steam can be directly used as process steam in a steam-consuming unit or can be supplied to the medium-pressure steam network. Importantly, the presence of the medium-pressure steam generator, particularly in combination with the high-pressure steam generator, allows for an effective and direct temperature control of the product steam by controlling the steam pressure generated in the medium-pressure steam generator, without the need for bypass valve for the product stream entering the medium-pressure steam generator. The presence of the medium-pressure steam generator further allows for indirect temperature control of the temperature of the ammonia synthesis gas provided to the inlet of the first ammonia converter, by means of a heat exchange in the first heat exchanger downstream of the medium-pressure steam generator, without the need for adjusting the position of bypass valves.

A first aspect of the present application provides an ammonia production plant, wherein the ammonia production plant, particularly the ammonia synthesis loop of the ammonia production plant, comprises:
(i) an ammonia converter system, wherein the ammonia converter system comprises one or more catalytic beds, an inlet for an ammonia synthesis gas, and an outlet for a product stream, wherein the ammonia synthesis gas comprises hydrogen and nitrogen, and wherein the product stream comprises ammonia and unreacted ammonia synthesis gas;
(ii) a first high-pressure steam generator, downstream of the ammonia converter system, configured to generate steam at a pressure ranging from 60 to 120 bara, particularly from 80 to 120 bara, using heat recovered from the product stream; and
(iii) a first heat exchanger, downstream of the high-pressure steam generator, configured for exchanging heat between the product stream and the ammonia synthesis gas, for heating the ammonia synthesis gas; and
(iv) a medium-pressure steam generator, configured to generate steam at a pressure ranging from 20 to 50 bara using heat recovered from the product stream and/or from the ammonia synthesis gas.

In particular embodiments, the medium-pressure steam generator is located downstream of the high-pressure steam generator, particularly between the high-pressure steam generator and the first heat exchanger, and the medium-pressure steam is configured to generate steam at a pressure ranging from 20 to 50 bara, such as from 35 to 50 bara, using heat recovered from the product stream. The generated medium-pressure steam may be provided to a medium-pressure steam network in the ammonia production plant, may be used as process steam in a steam-consuming unit in the ammonia production plant, or may be exported outside the ammonia production plant. Advantageously, the boiler feed water for the medium-pressure steam generator may be provided by the boiler feed water supply of the (first) high-pressure steam generator.

The ammonia production plant according to the present disclosure, particularly the ammonia synthesis loop thereof, more particularly the hot loop of the ammonia synthesis loop, thus comprises at least the following units and systems.
(A) in the ammonia converter system, an ammonia synthesis gas, comprising hydrogen and nitrogen, is catalytically converted into ammonia. The ammonia converter system typically comprises one or more ammonia converter units or reactors, with each ammonia converter unit comprising one or more catalyst beds. Suitable catalysts are well-known to the skilled person. The ammonia synthesis gas is provided to the inlet for the ammonia synthesis gas of the ammonia converter system, particularly to the inlet of the first catalyst bed or the first ammonia converter unit. A product stream comprising ammonia and unreacted ammonia synthesis gas, comprising unreacted hydrogen and nitrogen, leaves the ammonia converter system via the outlet for the product stream.
The ammonia converter system typically also comprises one or more heat recovery systems or heat removal systems between adjacent catalyst beds or converter units, to recover or remove the reaction heat and maintain the optimal reaction conditions in the ammonia converter system. Typically, a second heat exchanger may be located between two adjacent converter units or between two adjacent catalyst beds. This second heat exchanger may be configured for exchanging heat between the ammonia synthesis gas and the product stream exiting a converter unit or one or more catalyst beds upstream of the second high-pressure generator, thereby adjusting and controlling the temperature of the ammonia synthesis gas before it is provided to the ammonia converter system. Other possible heat recovery systems or heat removal systems in the ammonia converter system, particularly located between two adjacent converter units or catalyst beds, for recovering or removing the reaction heat include one or more of:
- a second high-pressure steam generator, configured for generating high-pressure steam using heat recovered from the product stream exiting the converter unit or the one or more catalyst beds upstream of the second high-pressure steam generator;
- a boiler feed water preheater, for heating the water provided to a steam generator;
- a HP steam superheater or a MP steam superheater, for superheating a high-pressure or medium-pressure steam; and/or
- further heat exchange systems, configured for exchanging the reaction heat between the product gas and a fluid, such as a process fluid, ambient air, ....

In particular embodiments, the ammonia converter system further comprises a medium-pressure steam superheater, particularly located between two adjacent converter units or catalyst beds, and configured for superheating the medium-pressure steam generated by the medium-pressure steam generator using heat recovered from the product stream exiting a converter unit or one or more catalyst beds upstream of the medium-pressure steam generator.

(B) A first heat recovery system to recover heat from the product stream leaving the ammonia converter system and to cool down the product stream is the first high-pressure steam generator. It is located downstream of the ammonia converter system and connected to the outlet for the product stream of the ammonia converter system and is configured to generate steam at a pressure of at least 60 bara, particularly ranging from 60 to 120 bara or 80 to 120 bara using heat recovered from the product stream. The high-pressure steam generator is further connected to a boiler feed water supply, which provides the water that is turned into high-pressure steam using the heat recovered from the product stream.

(C) A second heat recovery system to recover heat from the product stream, particularly from the product stream downstream of the first high-pressure steam generator, and to further cool down the product stream is the first heat exchanger. The first heat exchanger is located downstream of and in fluid connection with the first high-pressure steam generator, generally between the hot loop of the ammonia synthesis loop, where ammonia is generated from nitrogen and hydrogen, and the other sections of the ammonia synthesis loop, in particular the cold coop, wherein further (waste) heat is removed and product ammonia is condensed and separated from the unreacted gases, which are then compressed and returned to the hot loop. The first heat exchanger is configured for exchanging heat between the product stream and the ammonia synthesis gas. In more detail, the partially cooled product stream, downstream of the first high-pressure steam generator, is provided to the first heat exchanger via a product stream inlet, and the cooled product stream exits the first heat exchanger via a product stream outlet. The ammonia synthesis gas enters and exits the first heat exchanger via the ammonia synthesis gas inlet and outlet, respectively. The ammonia synthesis gas outlet of the first heat exchanger is fluidly connected with the ammonia synthesis gas inlet of the ammonia converter system by suitable connecting means, such as pipes or tubes, valves, and the like.

(D) The ammonia production plant according to the present disclosure further comprises a medium-pressure steam generator, configured to generate steam at a pressure ranging from 20 to 50 bara, such as from 35 to 50 bara, using heat recovered from the product stream and/or from the ammonia synthesis gas. In certain embodiments, the medium-pressure steam generator may be located upstream of the ammonia converter system, in fluid communication with the ammonia synthesis gas inlet of the ammonia converter system, configured to cool down the ammonia synthesis gas. In preferred embodiments, the medium-pressure steam generator is located downstream of the high-pressure steam generator, particularly between the high-pressure steam generator and the first heat exchanger, and is in fluid communication with the product stream outlet of the ammonia converter system, *inter alia* via the high-pressure steam generator, and is configured to cool down the product stream. Advantageously, this setup allows to recover more heat and cool the product stream to a greater extent prior to treating the product stream in the cold loop of the ammonia synthesis loop, particularly in the ammonia separation unit, wherein ammonia is recovered in liquid form by further cooling. Furthermore, by providing a cooler product stream to the first heat exchanger, a cooler ammonia synthesis gas can be obtained as well and provided to the ammonia converter system, with the ammonia synthesis gas entering the ammonia converter system having a temperature of between 30 and 80°C, such as between 40 and 60°C, lower than in a system not comprising a medium-pressure steam generator. The milder temperature conditions associated with the cooler ammonia synthesis gas allow the use of less hydrogen resistant materials in contact with the ammonia synthesis gas and the use of simpler designs. In certain embodiments, the material in contact with ammonia synthesis gas of the first heat exchanger and/or the connecting means between the ammonia synthesis gas outlet of the heat exchanger and the ammonia synthesis gas inlet of the ammonia converter system is 1 Cr ½ Mo steel or equivalent.

In particular embodiments, the ammonia production plant further comprises a medium-pressure steam network and/or a steam consuming unit, and the steam outlet of the medium-pressure steam generator is fluidly connected to the medium-pressure steam network and/or to the steam-consuming unit. In certain embodiments, the steam-consuming unit is a steam reforming unit, a process condensate stripper unit, or a carbon dioxide removal unit in a hydrogen production system of the ammonia production plant. Advantageously, the medium-pressure steam can be used directly as process steam in a steam-consuming unit. No steam superheating is required. Indeed, the medium-pressure steam can, for instance, be directly fed into a process condensate stripper. Therefore, the use of the medium-pressure steam as process steam means that less superheated steam from the medium-pressure steam network needs to be sent to the steam-consuming units, and can instead be exported. The steam consuming unit may also be a steam turbine, particularly when the medium-pressure steam has been superheated.

In particular embodiments, the ammonia production plant further comprises a supply of boiler feed water in fluid connection with the first high-pressure steam generator, wherein the supply of boiler feed water is further in fluid connection with the medium-pressure steam generator. Advantageously, the medium-pressure steam generator and the first high-pressure steam generator are connected to the same supply of boiler feed water. By taking the boiler feed water for the medium-pressure steam generator from the boiler feed water supply to the high-pressure steam generator, such as from the boiler feed water inlet from the high-pressure steam generator, no preheating of the boiler feed water for the medium-pressure steam generator is necessary.

In order to prevent the build-up of impurities in a steam generator, waste boiler feed water is generally extracted from the steam generator via a discharge line of waste boiler feed water, also referred to as blowdown. In particular, the waste boiler feed water line of a high-pressure steam generator, particularly of the first high-pressure steam generator, and which transports the waste boiler feed water, or blow-down, extracted from the high-pressure steam generator, is connected to or redirected to the medium-pressure steam generator. By supplying the waste boiler feed water, or blow-down, extracted from a high-pressure steam generator, particularly from the first high-pressure stream generator, to the medium pressure steam generator, medium pressure steam will be generated from the high-pressure waste boiler feed water by the reduction in pressure it experiences and by the direct heat transfer with the boiler feed water within the medium pressure steam generator. This way, additional medium pressure steam is generated in the medium-pressure steam generator, in addition to the medium-pressure steam generated from the heat recovery from the product stream. Impurities from the high-pressure steam generator introduced in the medium-pressure steam generator are subsequently removed via the discharge line of waste boiler feed water connected to the medium-pressure steam generator. In particular embodiments, the discharge line of waste boiler feed water connected to the medium-pressure steam generator is in fluid communication or connected to the discharge line of waste boiler feed water of the first high-pressure steam generator.

In particular embodiments, the ammonia production plant further comprises a means for controlling the pressure of the steam generated by the medium-pressure steam generator, and/or for controlling the ratio of the amount of high-pressure steam vs medium-pressure steam generated by the high-pressure steam generator and the medium-pressure steam generator, respectively. Suitable controlling means are known to the skilled person and includes valves, such as pressure release valves, or bypass lines of the steam generator with control valves to adjust the flow to the steam generator. Advantageously, the presence of a high-pressure steam generator and a medium-pressure steam generator provides a flexible and efficient way to control the operating temperature of the ammonia production plant, particularly of the ammonia synthesis loop.

The ammonia production plant according to the present disclosure typically further comprises an ammonia separator unit or section, for further cooling the product stream and separating ammonia from the unreacted ammonia synthesis gas, and a hydrogen production system, for producing the hydrogen of the ammonia synthesis gas.

The ammonia separator unit comprises an inlet for a product stream, particularly a cooled product stream exiting the first heat exchanger, which is in fluid communication with or connected to the product stream outlet of the first heat exchanger, an outlet for ammonia and an outlet for the unreacted ammonia synthesis gas. The unreacted ammonia synthesis gas is recycled to the ammonia converter system, particularly by combining the unreacted ammonia synthesis with additional hydrogen and nitrogen, such as in a syngas compressor, thereby obtaining the ammonia synthesis gas.

The hydrogen production system may comprise a water electrolysis unit to generate hydrogen, particularly to generate so-called green hydrogen when using electricity obtained from renewable sources.

The hydrogen production system may further comprise a reforming section, a shift conversion section, a CO₂ removal unit, and one or more further purification units, such as a methanation unit or a liquid nitrogen wash section. In the reforming section, also referred to as a steam reforming section, a syngas, comprising hydrogen and CO, is produced by catalytically reacting a feed gas comprising hydrocarbons, particularly methane, with water (steam). The reforming section comprises one or more reforming units, such as a pre-reformer, a primary and secondary reformer; and/or an autothermal reformer. In the shift conversion unit, water (steam) reacts with the CO present in the syngas, thereby obtaining additional hydrogen and CO₂. In the CO₂ removal unit, carbon dioxide is removed from the hydrogen containing stream generated in the shift conversion section. In the one or more further purification units, further impurities are removed, particularly impurities which may negatively affect the downstream use of the hydrogen. Examples include a methanation unit, wherein the carbon oxides (CO and CO₂) are converted into methane; and/or a liquid nitrogen wash section or cold box, wherein gaseous high-pressure nitrogen is partially liquefied and is used as a washing agent to wash out impurities, particularly CO, argon, and methane, from the hydrogen product stream.

A second related aspect of the present disclosure relates to a method for revamping an existing ammonia production plant into an ammonia production plant according to the present disclosure, in order to obtain the many advantages of the ammonia production plant according to the present disclosure. The existing ammonia production plant, particularly the ammonia synthesis loop thereof, comprises at least:
- an ammonia converter system as described above, comprising one or more catalytic beds, an inlet for an ammonia synthesis gas, and an outlet for a product stream;
- a first high-pressure steam generator as described above, downstream of the ammonia converter system, configured to generate steam at a pressure of at least 60 bara, particularly ranging from 60 to 120 bara or from 80 to 120 bara using heat recovered from the product stream; and
- a first heat exchanger as described above, downstream of the ammonia converter, configured for exchanging heat between the product stream and the ammonia synthesis gas, for heating the ammonia synthesis gas, wherein the ammonia synthesis gas outlet of the heat exchanger is fluidly connected with the ammonia synthesis gas inlet of the ammonia converter system by connecting means.

The revamping method comprises the step of installing a medium-pressure steam generator, configured to generate steam at a pressure ranging from 20 to 50 bara using heat recovered from the product stream and/or from the ammonia synthesis gas. In certain embodiments, the medium-pressure steam generator is installed upstream of the ammonia converter system, in fluid communication with the ammonia synthesis gas inlet of the ammonia converter system, configured to cool down the ammonia synthesis gas. Preferably, the medium-pressure steam generator is installed downstream of the first high-pressure steam generator, particularly between the first high-pressure steam generator and the first heat exchanger, and the medium-pressure steam generator is configured to generate steam at a pressure ranging from 20 to 50 bara using heat recovered from the product stream.

In particular embodiments, the medium-pressure steam generator is installed in fluid communication with the boiler feed water supply of the first high-pressure steam generator. The boiler feed water supply of the first high-pressure steam generator is thus configured to provide boiler feed water to the medium-pressure steam generator.

In particular embodiments, the first high-pressure steam generator is connected to a waste boiler feed water line, for removing or discharging waste boiler feed water from the first-high pressure steam generator, and wherein the waste boiler feed water line of the first-high pressure steam generator is in fluid communication with or connected to the medium-pressure steam generator, or stated differently, wherein the method further comprise installing the medium-pressure steam generator in fluid communication with or connected to the waste boiler feed water line of the first high-pressure steam generator. By installing the medium-pressure steam generator in fluid communication with the waste boiler feed water extracted from a high-pressure steam generator, in particular from the first high-pressure steam generator, additional medium-pressure steam is generated by the reduction in pressure experienced by the waste boiler feed water and by direct heat transfer with the boiler feed water present in the medium pressure steam generator. In particular embodiments, the waste boiler feed water line of the medium-pressure steam generator is installed in fluid communication with the process line which was originally used to discharge waste boiler feed water extracted from the first high-pressure steam generator, particularly with the waste boiler feed water line of the first high-pressure steam generator, thereby discharging the waste boiler feed water from the medium-pressure steam generator to the same process location as for the original waste boiler feed water line of the first high-pressure steam generator.

In particular embodiments, the medium-pressure steam generator is installed in fluid communication with or connected to a medium-pressure steam network of the ammonia production plant and/or to a steam-consuming unit, such as a steam reforming unit, a CO₂ removal unit or process condensate stripper in a hydrogen production section of the ammonia production plant, wherein the medium-pressure steam is used as process steam.

In particular embodiments, the installation of the medium-pressure steam generator results in a cooler product stream and a cooler ammonia synthesis gas, which allows the use of less resistant materials in contact with the ammonia synthesis gas. Whereas in an existing ammonia production plant, the material in contact with the ammonia synthesis gas is 2¼ Cr 1 Mo steel or equivalent, this may safely be replaced by less resistant materials, such as 1 ¼ Cr ½ Mo steel or equivalent. Accordingly, in particular embodiments, the revamping method further comprises the step of replacing the first heat exchanger and/or the connecting means between the ammonia synthesis gas outlet of the first heat exchanger and the ammonia synthesis gas inlet of the ammonia converter system by a heat exchanger and/or connecting means wherein the material in contact with the ammonia synthesis gas is 1 ¼ Cr ½ Mo steel or equivalents thereof, as known to the skilled person.

In order to further control the temperature of the ammonia synthesis gas, in particular as the ammonia synthesis gas has a lower temperature at the inlet of the ammonia converter system, additional modifications to the ammonia converter system may be made as well. In particular embodiments, wherein the (existing) ammonia converter system comprises (a) one or more ammonia converter units, wherein each ammonia converter unit comprises one or more catalyst beds, and (b) one or more second heat exchangers located between two adjacent converter units or catalyst beds, configured for exchanging heat between the ammonia synthesis gas and the product stream exiting a converter unit or catalyst bed; the revamping method comprises the step of replacing the one or more catalyst beds by one or more new catalyst beds with a more active or more efficient catalyst, which is able to maintain the same or similar product temperature from the first catalyst bed even with the lower temperature of the ammonia synthesis gas provided to the one or more catalyst beds.th In addition, at least one of the one or more second heat exchangers may be replaced by a heat exchanger with a smaller capacity and/or may be bypassed to reduce the amount heat exchanged.

A further related aspect of the present disclosure provides a method for operating an ammonia production plant, comprising the steps of:
(a) providing an ammonia synthesis gas to an ammonia converter system as described above, the ammonia converter system comprising one or more catalytic beds, and generating a product stream;
(b) providing the product stream from the ammonia converter system to a high-pressure steam generator, and generating high-pressure steam at a pressure of at least 60 bara, particularly ranging from 60 to 120 bara or from 80 to 120 bara;
(c) heating the ammonia synthesis gas in a heat exchanger, downstream of the high-pressure steam generator, using heat recovered from the product stream;
   characterized in that the method further comprises the step of
(d) generating medium pressure steam at a pressure ranging from 20 to 50 bara in a medium pressure steam generator, using heat recovered from the product stream and/or from the ammonia synthesis gas.

In certain embodiments, in step (d), medium pressure steam is generated in a medium-pressure steam generator, using heat recovered from the ammonia synthesis gas, upstream of the ammonia converter system, wherein the medium-pressure steam generator is located between the first heat exchanger and the ammonia converter system. Preferably, in step (d), medium pressure steam is generated in a medium pressure generator, using heat recovered from the product stream, downstream of the first high-pressure steam generator, wherein the medium pressure generator is located between the first high-pressure steam generator and the first heat exchanger.

In particular embodiments, the ammonia synthesis gas is provided to the ammonia converter system, particularly to a first reactor or a first catalytic bed of the ammonia converter system, at a temperature ranging between 330 °C and 370 °C, particularly at a temperature between 340°C and 360 °C. This is about between 30 and 80°C, such as between 40 and 60°C lower than the temperature of the ammonia synthesis gas (about 400-430°C) provided to the ammonia converter system in an ammonia production plant without a medium-pressure steam generator.

In particular embodiments, the method further comprises the step of controlling the temperature of the ammonia synthesis gas and/or the temperature in the ammonia converter system by increasing or decreasing the pressure of the medium pressure steam generated in step (d) and/or by increasing or decreasing the ratio, particularly the weight ratio, of the generated medium-pressure steam to the generated high-pressure steam. Advantageously, by varying the pressure of the medium-pressure steam, the boiling point of the steam will be varied as well, and, accordingly, the temperature of the product stream exiting the medium-pressure generator, and by extension the process temperature in the various sections of the ammonia production plant, in particular in the various sections of the ammonia synthesis loop, can be effectively controlled. This may be particularly relevant when the ammonia production plant operates in low-load conditions by allowing the reduction of heat recovery in the medium-pressure steam generator without the use of a bypass. Similarly, by varying the amount of high-pressure and medium-pressure steam generated by the first high-pressure steam generator and the medium pressure steam generator, respectively, or stated differently by varying the amount of heat recovered as high-pressure or medium-pressure steam, effective process temperature control can be obtained. This can be seen as a valuable alternative to using a bypass conduit or valve, to (partially) bypass a heat exchanger or steam generator, to control the heat recovery in the ammonia synthesis, or to control low-load operation of the ammonia production plant, particularly in the hydrogen-rich, high pressure and high temperature sections of the ammonia synthesis process. The presence of the medium-pressure steam generator thus allows effective process temperature control via steam-side pressure control in the medium-pressure steam generator and, optionally, in the high-pressure steam generator.

In particular embodiments, the method further comprises at least one more of:
- using the medium-pressure steam generated in step (d) as process steam in a steam-consuming unit in the ammonia production plant. In certain embodiments, the steam-consuming unit is a steam reforming unit, a CO₂ removal unit or process condensate stripping unit in a hydrogen production system of the ammonia production plant;
- providing the medium-pressure steam generated in step (d) to a medium-pressure steam network;
- using the medium-pressure steam generated in step (d) directly as a hot utility within the ammonia production plant and/or
- exporting the medium-pressure steam generated in step (d) outside the ammonia production plant.

### Exemplary embodiment

Figure 1 represents an ammonia synthesis loop (100) of an exemplary embodiment of an ammonia plant according to the present disclosure.

The ammonia synthesis loop (100) comprises an ammonia converter system (110), comprising a series of two ammonia converter units or reactors (111, 113), each containing one or more catalyst beds (112, 114). An ammonia synthesis gas, at a temperature of about 350 to 360 °C, is provided to the ammonia converter system (110) via the ammonia synthesis gas inlet (115), and a product stream comprising ammonia and unreacted ammonia synthesis exits the ammonia converter system via the product outlet (116) at a temperature of about 440°C. The hot product stream exiting the ammonia converter system at a temperature of about 440°C is first cooled down to a temperature of about 330 °C in a first high-pressure steam generator (120), generating high-pressure steam (HP steam) at about 100 bar (with a temperature of about 320 °C). The product stream is subsequently further cooled to a temperature of about 270 °C in a medium-pressure steam generator (130), generating medium pressure steam (MP steam) of about 40 bar at a temperature of about 250 C°. The temperature of the ammonia synthesis gas is about 40-60°C lower than in an ammonia synthesis loop which does not comprise a medium-pressure steam generator.

A heat exchanger (117) is situated between the converter units to heat up the ammonia synthesis gas and maintain the reaction (temperature) conditions in the ammonia converter system (110). Optionally, further heat recovery systems or heat removal systems using the reaction heat, such as a second high-pressure steam generator, a boiler feed water preheater or a HP or M P steam superheater or a MP steam superheater, (not shown) may be present between the converter units as well. Further, the temperature of the product stream can be controlled and adjusted by increasing or decreasing the pressure of the medium pressure steam, and thus its boiling point, and/or by increasing or decreasing the amount of HP steam and MP steam generated by the respective steam generators. Finally, the product stream is further cooled in a first heat exchanger (140). The high-pressure steam generator and the medium pressure generator are supplied with boiler feed water (BFW) from a common source.

A waste boiler feed water or blowdown ("HP blowdown") of liquid water at 100 bar and a temperature of about 320°C is extracted from the first high-pressure steam generator (120). The stream is fed to the medium-pressure steam generator (130) wherein medium-pressure steam is generated by the reduction in pressure experienced by the waste boiler feed water and by direct heat transfer with the boiler feed water present in the medium pressure steam generator (130). Waste boiler feed water ("MP blowdown") is further extracted from the medium-pressure steam generator (130) and sent to a unit for further energy recovery (not shown).

The cooled product stream exiting the heat exchanger (140), comprising ammonia, (unreacted) hydrogen and (unreacted) nitrogen, is further provided to the ammonia separation section (not shown), to further cool the product stream and to separate the ammonia from the hydrogen and nitrogen. The recovered, unreacted hydrogen and nitrogen are recycled to the ammonia synthesis loop. Following mixing with new hydrogen and nitrogen to obtain the ammonia synthesis gas, it is heated in the first heat exchanger (140) and the second heat exchanger (117) before it is provided to the ammonia converter system (110).

## Claims

1. An ammonia production plant comprising
- an ammonia converter system comprising one or more catalytic beds, an inlet for an ammonia synthesis gas, and an outlet for a product stream, wherein the ammonia synthesis gas comprises hydrogen and nitrogen, and wherein the product stream comprises ammonia and unreacted ammonia synthesis gas;
- a first high-pressure steam generator, downstream of the ammonia converter system, configured to generate steam at a pressure ranging from 60 to 120 bara using heat recovered from the product stream; and
- a first heat exchanger, downstream of the high-pressure steam generator, configured for exchanging heat between the product stream and the ammonia synthesis gas, for heating the ammonia synthesis gas, wherein the ammonia synthesis gas outlet of the first heat exchanger is fluidly connected with the ammonia synthesis gas inlet of the ammonia converter system by connecting means;
**characterized in that** the ammonia production plant further comprises a medium-pressure steam generator, configured to generate steam at a pressure ranging from 20 to 50 bara using heat recovered from the product stream and/or from the ammonia synthesis gas.

2. The ammonia production plant according to claim 1, wherein the medium-pressure steam generator is located downstream of the high-pressure steam generator, particularly between the high-pressure steam generator and the first heat exchanger, and wherein the medium-pressure steam generator is configured to generate steam at a pressure ranging from 20 to 50 bara using heat recovered from the product stream.

3. The ammonia production plant according to claims 1 or 2, further comprising a medium-pressure steam network and/or a steam consuming unit, wherein the steam outlet of the medium-pressure steam generator is fluidly connected to the medium-pressure steam network and/or to the steam-consuming unit, particularly wherein the steam-consuming unit is a steam reforming unit or process condensate stripping unit in a hydrogen production system of the ammonia production plant.

4. The ammonia production plant according to any one of claims 1 to 3, further comprising a supply of boiler feed water, wherein the medium-pressure steam generator and the first high-pressure steam generator are connected to the same supply of boiler feed water

5. The ammonia production plant according to any one of claims 1 to 4, wherein the first high-pressure steam generator is connected to a waste boiler feed water line, for removing waste boiler feed water from the first-high pressure steam generator, wherein the waste boiler feed water line is in fluid communication with or connected to the medium-pressure steam generator.

6. The ammonia production plant according to any one of claims 1 to 5, further comprising a controlling means, for controlling the pressure of the steam generated by the medium-pressure steam generator, and/or for controlling the weight ratio of high-pressure steam vs medium-pressure steam generated by the high-pressure steam generator and the medium-pressure steam generator, respectively.

7. The ammonia production plant according to any one of claims 1 to 6, wherein the material in contact with ammonia synthesis gas of the first heat exchanger and/or the connecting means between the ammonia synthesis gas outlet of the heat exchanger and the ammonia synthesis gas inlet of the ammonia converter system is 1 ¼ Cr ½ Mo steel.

8. The ammonia production plant according to any one of claims 1 to 7, wherein the ammonia converter system comprises (a) one or more ammonia converter units, wherein each ammonia converter unit comprises one or more catalyst beds, (b) one or more second heat exchangers located between two adjacent converter units or catalyst beds, particularly configured for exchanging heat between the ammonia synthesis gas and the product stream exiting a converter unit or one or more catalyst beds, and, optionally, one or more heat recovery or heat removal systems located between two adjacent converter units or catalyst beds, configured for recovering or removing the heat from the product stream exiting a converter unit or one or more catalyst beds, particularly wherein the heat recovery or heat removal system is a medium-pressure steam superheater, configured for superheating the medium pressure steam generated by the medium-pressure steam generator using heat from the product stream exiting a converter unit or one or more catalyst beds.

9. A method for revamping an ammonia production plant, wherein the ammonia production plant comprises:
- an ammonia converter system comprising one or more catalytic beds, an inlet for an ammonia synthesis gas, and an outlet for a product stream, wherein the ammonia synthesis gas comprises hydrogen and nitrogen, and wherein the product stream comprises ammonia and unreacted ammonia synthesis gas;
- a first high-pressure steam generator, downstream of the ammonia converter system, configured to generate steam at a pressure ranging from 60 to 120 bara using heat recovered from the product stream; and
- a first heat exchanger, downstream of the ammonia converter, configured for exchanging heat between the product stream and the ammonia synthesis gas, for heating the ammonia synthesis gas, wherein the ammonia synthesis gas outlet of the heat exchanger is fluidly connected with the ammonia synthesis gas inlet of the ammonia converter system by connecting means;
**characterized in that** the method further comprises the step of installing a medium-pressure steam generator, configured to generate steam at a pressure ranging from 20 to 50 bara using heat recovered from the product stream and/or from the ammonia synthesis gas;
particularly wherein the medium-pressure steam generator is installed downstream of the first high-pressure steam generator, more particularly between the first high-pressure steam generator and the first heat exchanger, and wherein the medium-pressure steam generator is configured to generate steam at a pressure ranging from 20 to 50 bara using heat recovered from the product stream.

10. The method according to claim 9, wherein the medium-pressure steam generator is connected to the boiler feed water supply of the first high-pressure steam generator; and/or wherein the medium-pressure steam generator is in fluid communication with or connected to a medium-pressure steam network and/or to a steam-consuming unit of the ammonia production plant.

11. The method according to claim 9 or 10, wherein the first high-pressure steam generator is connected to a waste boiler feed water line, for removing waste boiler feed water from the first-high pressure steam generator, and wherein the waste boiler feed water line of the first-high pressure steam generator is in fluid communication with or connected to the medium-pressure steam generator.

12. The method according to any one of claims 9 to 11, further comprising the step of replacing the first heat exchanger and/or the connecting means between the ammonia synthesis gas outlet of the first heat exchanger and the ammonia synthesis gas inlet of the ammonia converter system by a heat exchanger and/or connecting means wherein the material in contact with the ammonia synthesis gas is 1 ¼ Cr ½ Mo steel or equivalent.

13. A method for operating an ammonia production plant, comprising the steps of
(a) providing an ammonia synthesis gas to an ammonia converter system comprising one or more catalytic beds, and generating a product stream, wherein the ammonia synthesis gas comprises hydrogen and nitrogen, and wherein the product stream comprises ammonia and unreacted ammonia synthesis gas;
(b) providing the product stream from the ammonia converter system to a high-pressure steam generator, and generating high-pressure steam at a pressure ranging from 60 to 120 bara;
(c) heating the ammonia synthesis gas in a heat exchanger, downstream of the high-pressure steam generator, using heat recovered from the product stream;
**characterized in that** the method further comprises the step of
(d) generating medium pressure steam at a pressure ranging from 20 to 50 bara in a medium pressure steam generator, using heat recovered from the product stream and/or from the ammonia synthesis gas, particularly using heat recovered from the product stream, downstream of the first high-pressure steam generator and upstream of the first heat exchanger.

14. The method according to claim 13, wherein the ammonia synthesis gas is provided to the ammonia converter system, particularly to a first reactor or a first catalytic bed of the ammonia converter system, at a temperature ranging between 330 °C and 370 °C, particularly at a temperature between 340°C and 360 °C.

15. The method according to claim 13 or 14, further comprising the step of controlling the temperature of the ammonia synthesis gas, the temperature of the product stream, and/or the temperature in the ammonia converter system by increasing or decreasing the pressure of the medium pressure steam generated in step (d) and/or by increasing or decreasing the ratio of the generated medium-pressure steam to the generated high-pressure steam.
